(19) Europäisches Patentamt / European Patent Office / Office européen des brevets

(11) **EP 3 767 516 A1**

(12) **EUROPEAN PATENT APPLICATION**

(43) Date of publication:
**20.01.2021 Bulletin 2021/03**

(51) Int Cl.:
**G06F 40/295** (2020.01)     **G06F 40/284** (2020.01)
**G06F 40/30** (2020.01)     **G06N 20/00** (2019.01)

(21) Application number: **20185774.5**

(22) Date of filing: **14.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.07.2019 CN 201910650142**

(71) Applicant: **Ricoh Company, Ltd.**
**Tokyo 143-8555 (JP)**

(72) Inventors:
• **ZHANG, Yongwei**
**Haidian District, Beijing 100044 (CN)**
• **TONG, Yixuan**
**Haidian District, Beijing 100044 (CN)**
• **LIU, Boyan**
**Haidian District, Beijing 100044 (CN)**
• **JIANG, Shanshan**
**Haidian District, Beijing 100044 (CN)**
• **DONG, Bin**
**Haidian District, Beijing 100044 (CN)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **NAMED ENTITY RECOGNITION METHOD, APPARATUS, AND COMPUTER-READABLE RECORDING MEDIUM**

(57)     The present invention relates to a named entity recognition method, a named entity recognition apparatus, and a computer-readable recording medium. The named entity recognition method according to the present invention concatenates an internal feature of a head unit in a word vector and a context feature of the head unit during multi-head attention training and adopts the concatenated feature as a representation of the head unit. Accordingly, the feature information of the word can be better represented, and by sufficiently making use of the context information of the word during the named entity recognition, the embodiment of the present invention can improve the accuracy of the named entity recognition.

FIG.4

$$h_i = \mathrm{Concat}(h_i^e \ , \ h_i^d)$$

$h_i^e$     $h_i^d$

MULTI-HEAD ATTENTION MODEL     ATTENTION MODEL

POSITION ENCODING VECTOR

+

WORD VECTOR     SECOND FEATURE VECTOR (NAMED ENTITY FEATURE VECTOR)

**Description**

BACKGROUND OF THE INVENTION

1. Field of the Invention

The present invention relates to natural language processing image processing (NLP, Natural Language Processing), and more specifically, to a named entity recognition method, a named entity recognition apparatus, and a computer-readable recording medium.

2. Description of the Related Art

In the field of artificial intelligence, information extraction technology is an indispensable and important technology. Currently, there are mainly three types of information extraction techniques. The first method is an extraction method based on a knowledge map. This extraction method requires a support for data of the knowledge map and rules. A large amount of human resources are required to build a knowledge map, and the amount of data that can be finally obtained is not ideal. The second method is an extraction method based on a conventional statistical machine learning method. This method can be applied to different learning models and can handle different scenes using the manually labeled training data. However, this method has a drawback in high labor costs and difficulty in popularization, and a bottleneck occurs when it is applied to a wide range of applications. The last method is the method that uses a neural network model that has recently become popular. As compared to traditional machine learning methods, neural network-based models using large-scale training datasets achieve superior performance in natural language processing tasks.

Named entity recognition (NER) is a task commonly used in natural language processing, and a named entity is used as a basic unit of semantic expression in a very large number of situations, and is used for a very wide range of applications. Therefore, the named entity recognition technique achieves an important role. A named entity is usually an entity that has a special meaning or very strong referentiality in the text, and usually includes a name of a person, a name of a place, a name of an organization, a time, a proper noun, and the like. The named entity recognition technique achieves an important role because the named entity is the basic unit of semantic expression in a very wide range of tasks. In other words, a highly accurate named entity recognition method has a very important significance in the development of systems for high-performance translation, conversation, public opinion monitoring, theme tracking, and semantic understanding.

SUMMARY OF THE INVENTION

It is an object of the embodiment of the present invention to provide a named entity recognition method and a named entity recognition apparatus, and to improve the accuracy of the named entity recognition.

According to an aspect of an embodiment of the present invention, provided is a named entity recognition method including:

obtaining and merging a position encoding vector and a word vector of a word in a training sentence to obtain a first feature vector of the word;
generating a second feature vector of the word, on the basis of whether a context including the word exists in a named entity dictionary configured in advance;
inputting the first feature vector of the word into a multi-head attention model in a neural network model to perform training and obtain a semantic information feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged; and
merging the semantic information feature and the physical boundary feature of the word to obtain an output feature of the word, and extracting a named entity on the basis of the output feature of the word in the training sentence.

Also, according to an embodiment of the present invention, the obtaining and merging the position encoding vector may further comprise generating an even number bit element of the position encoding vector, on the basis of a first expression $sin\ (pos/\ 10000^{2i/d_{model}})$, and generating an odd number bit element of the position encoding vector, on the basis of a second expression $cos\ (pos/1000^{2i/d_{model}})$, where $pos$ denotes a position of the word in the training sentence, i denotes a dimension corresponding to the even number bit element or the odd number bit element, and $d_{model}$ denotes a dimension of the word vector.

Also, according to an embodiment of the present invention, the word vector of the word may be obtained through training according to a method of at least one of word embedding (word2vec), a convolutional neural network (CNN), a recurrent neural network (RNN), bidirectional encoder representation from transformers (BERT), or random initialization.

Also, according to an embodiment of the present invention, the generating the second feature vector of the word may further comprise:

obtaining one-hot encodings of the word, on the basis of whether contexts of predetermined lengths in the training sentence exist in the named entity dictionary, the named entity dictionary including a plurality of reference named entities, the context including the word, and the word serving as a boundary; and

obtaining and concatenating the one-hot encodings of the word in the contexts with different lengths to obtain the second feature vector of the word.

Also, according to an embodiment of the present invention, the merging the semantic information feature and the physical boundary feature of the word to obtain an output feature of the word further may comprise merging a state of a hidden layer of the semantic information feature and a state of a hidden layer of the physical boundary feature to obtain a state of a hidden layer of the word.

Also, according to an embodiment of the present invention, the extracting the named entity on the basis of the output feature of the word in the training sentence may comprise generating a segmented sequence of the training sentence on the basis of the state of the hidden layer of the word in the training sentence, and inputting the segmented sequence into an output layer, which is a softmax layer, of the neural network model, to train the neural network model, and obtaining, on the basis of a maximum likelihood estimation, a result with a maximum conditional probability that is output by the softmax layer and adopting the result as a named entity, to which the segmented sequence of the training sentence belongs, and a probability of the named entity.

Also, according to an embodiment of the present invention, after the neural network model is trained, the named entity recognition method may further comprise extracting and labeling a named entity from an extraction target sentence by using the neural network obtained through the training.

The embodiment of the present invention also provides a named entity recognition apparatus, which includes:

a first feature vector generation unit configured to obtain and merge a position encoding vector and a word vector of a word in a training sentence to obtain a first feature vector of the word;

a second feature vector generation unit configured to generate a second feature vector of the word, on the basis of whether a context including the word exists in a named entity dictionary configured in advance;

a first feature training unit configured to input the first feature vector of the word into a multi-head attention model in a neural network model to perform training and obtain a semantic information feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged;

a second feature training unit configured to input the second feature vector of the word into an attention model in the neural network model to perform training and obtain a physical boundary feature of the word; and

an extraction unit configured to merge the semantic information feature and the physical boundary feature of the word to obtain an output feature of the word, and extract a named entity on the basis of the output feature of the word in the training sentence.

Also, according to an embodiment of the present invention, the second feature vector generation unit may obtain one-hot encodings of the word, on the basis of whether contexts of predetermined lengths in the training sentence exist in the named entity dictionary, the named entity dictionary may include a plurality of reference named entities, the context may include the word, and the word may serve as a boundary, and the one-hot encodings of the word in the contexts with different lengths may be obtained and concatenated to obtain the second feature vector of the word.

Also, according to an embodiment of the present invention, the extraction unit may merge a state of a hidden layer of the semantic information feature and a state of a hidden layer of the physical boundary feature to obtain a state of a hidden layer of the word.

The embodiment of the present invention also provides a named entity recognition apparatus including a memory, a processor, and a computer program stored in the memory and executable by the processor. When the computer program is executed by the processor, the steps of the above named entity recognition method are achieved.

The embodiment of the present invention also provides a computer-readable recording medium, and the computer-readable recording medium is recorded with a computer program, and when the computer program is executed by the processor, the steps of the named entity recognition method are achieved.

As compared with conventional techniques, the named entity recognition method, the named entity recognition apparatus, and the computer-readable recording medium according to the embodiment of the present invention concatenate an internal feature of a head unit in a word vector and a context feature of the head unit during multi-head attention training and adopt the concatenated feature as a representation of the head unit. Accordingly, the feature information of the word can be better represented, and by sufficiently making use of the context information of the word during the named entity recognition, the embodiment of the present invention can improve the accuracy of the named entity recognition.

BRIEF DESCRIPTION OF THE DRAWINGS

In order to clarify the techniques of an embodiment of the present invention, the drawings used to describe the embodiment of the present invention will be briefly explained below. It is to be understood that the drawings described below are merely an embodiment of the present invention, and it would be clear for a person skilled in the art that other drawings obtained based on the accompanying drawings can be made without requiring any creative work.

FIG. 1 is a flowchart illustrating a named entity recognition method according to the embodiment of the present invention.
FIG. 2 is a figure illustrating an example of a generated second feature vector according to the embodiment of the present invention.
FIG. 3 is a figure illustrating an example of dividing a first feature vector according to the embodiment of the present invention.
FIG. 4 is a figure illustrating an example of training performed based on first and second feature vectors according to the embodiment of the present invention.
FIG. 5 is a structural diagram illustrating a named entity recognition apparatus according to the embodiment of the present invention.
FIG. 6 is another structural diagram illustrating a named entity recognition apparatus according to the embodiment of the present invention.

DESCRIPTION OF THE EMBODIMENT

In order to further clarify the problems to be solved by the present invention, techniques, and advantages, hereinafter, drawings and a concrete embodiment are described in combination in detail. In the following drawings, the specific arrangement and specific details of the modules are only for the sake of helping the understanding of the entire embodiment of the present invention. Therefore, it should be understood that a person skilled in the art can make various modifications and improvements to the embodiment described here without departing from the scope and spirit of the present invention. Also, for the sake of clarity and brevity, explanation about known functions and structures is omitted.

It should be understood that "one embodiment" or "an embodiment" referred to throughout the specification indicates that at least one embodiment of the present invention includes particular features, structures, and characteristics associated with the embodiment. Therefore, "in one embodiment" or "in an embodiment" used in various places throughout the specification does not necessarily mean that the described features belong to the same embodiment. Also, these particular features, structures, and characteristics can be combined into one or more embodiments by any suitable method.

In the embodiment of the present invention, numbers attached to the steps do not indicate the order of execution in a process. The order of execution of steps in a process depends on the functions and the internal logics, and such numbers attached to the steps do not impose any limitation on how the embodiment of the present invention is implemented.

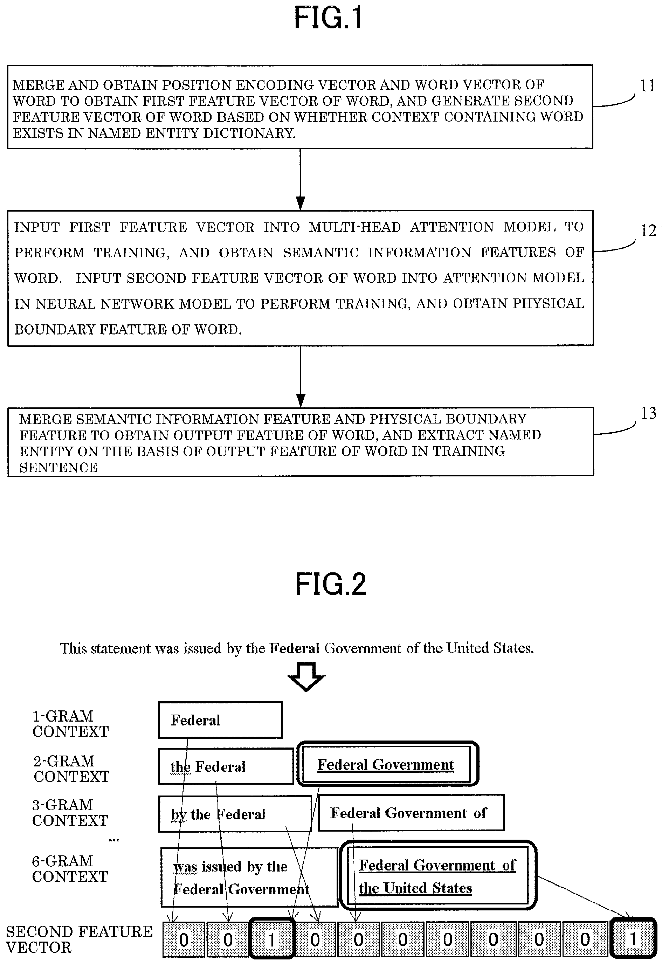

FIG. 1 is a flowchart illustrating a named entity recognition method according to the embodiment of the present invention. The named entity recognition method according to the embodiment of the present invention can improve the accuracy of the named entity recognition. As illustrated in FIG. 1, the named entity recognition method according to the embodiment of the present invention includes the following steps.

In step 11, for each word in the training sentence, the position encoding vector and the word vector of the word are obtained and merged to obtain a first feature vector of the word. Then, a second feature vector of the word is generated based on whether a context containing the word exists in a named entity dictionary configured in advance.

Here, the training sentence is a sentence in training data collected in advance, and usually, the training data includes multiple training sentences. A neural network model can be trained using the training sentences, and after the neural network model thus trained is obtained, named entities can be extracted from an extraction target sentence by using the neural network model.

In step 11 of the embodiment of the present invention, the position encoding vector and the word vector of each word in the training sentence are to be obtained. In order to improve the processing efficiency, the word vector (word embedding) trained in advance may be directly used in step 11. Specifically, the word vector is obtained through training according to a method of at least one of word embedding (word2vec), a convolutional neural network (CNN), a recurrent neural network (RNN), bidirectional encoder representation from transformers (BERT), or random initialization. The position encoding vector includes position feature information about the word vector in the training sentence. In an implementation, the position encoding vector can refer to a generation method in a transformer model. For example, even number bit elements of the position encoding vector are generated on the basis of a first expression $sin\ (pos/10000^{2i/d_{model}})$, and odd number bit elements of the position encoding vector are generated on the basis of a second expression $cos\ (pos/10000^{2i/d_{model}})$. In the expression, $pos$ denotes a position of the word in the training sentence, $i$ denotes a dimension corresponding to the even number bit element or the odd number bit element, and $d_{model}$ denotes a dimension of the word vector. At this occasion, the position encoding vector is a vector with the same dimension as the word vector, and each element in the position encoding vector ranges from -1 to 1.

In addition, it should be noted that the generation method of the position encoding explained above is merely one of the methods for generating the position encoding according to the embodiment of the present invention. Although other algorithms are not explained in the present specification, for example, "Convolutional Sequence to Sequence Learning" (arXiv preprint arXiv:1705.03122v2, 2017) by Jonas Gehring et al, may be referred to.

In the embodiment of the present invention, after the position encoding vector and the word vector of the word are obtained, the position encoding vector and the word vector of the word are merged. Specific examples of merging methods include, but are not limited to, vector addition and vector concatenation. Here, the vector concatenation means connecting the start point and the end point of the two vectors to obtain a vector of a higher dimension. For example, when both of the feature vectors are 20-dimensional vectors, a 40-dimensional vector can be obtained as a result of the vector concatenation. In a case where the embodiment of the present invention employs the method of the vector addition, the position encoding vector and the word vector of the word may be added to obtain a first feature vector of the same dimension. In this case, the first feature vector already includes not only the feature information about the word vector but also the position feature information about the word in the training sentence.

In step 11, a second feature vector of the word is also generated. Specifically, on the basis of whether a context of a predetermined length in the training sentence exists in the named entity dictionary, a one-hot encoding of the word is obtained, i.e., a one-hot encoding of the word based on the context is obtained. It should be noted that the named entity dictionary includes multiple reference named entities, and the contexts includes the word, and the word serves as a boundary. The predetermined length may be 1 to N. N can be set based on factors such as the maximum length N' of the reference named entity in the named entity dictionary and the requirements on the calculation amount, and is set to, for example, N' or an integer close to N'. Then, the one-hot encodings of the word in the contexts with different lengths are obtained and concatenated to obtain the second feature vector of the word. That is, the one-hot encodings of the word in contexts of different lengths are merged, and the vector obtained by merging the one-hot encodings is used as the second feature vector of the word. That is, the one-hot encodings of the word in contexts of different lengths are concatenated, and the vector obtained by concatenating the one-hot encodings is adopted as the second feature vector of the word.

For example, for a given sentence $X = (x_1, x_2, ... , x_n)$ (in the expression, $x_1, x_2, ..., x_n$ represent respective words in the order of appearance in the sentence) and a named entity dictionary, first, context templates defined in advance are used to construct N-gram context templates containing the word $x_i$. Table 1 illustrates an example of context templates.

Table 1

| N gram | Context template |
|---|---|
| 1 gram | $x_i$ |
| 2 gram | $x_{i-1}x_i,\ x_ix_{i+1}$ |
| 3 gram | $x_{i-2}x_{i-1}x_i,\ x_ix_{i+1}x_{i+2}$ |
| ... | ... |
| N gram | $x_{i-n+1}x_{i-n+2}...x_i,\ x_ix_{i+1}...x_{i+n-1}$ |

For each text segment of each context template, a binary value can be generated to indicate whether the text segment is a reference entity in the named entity dictionary. Then, the binary values generated based on the context templates are concatenated to generate a (2N-1)-dimensional vector (i.e., the second feature vector described in this specification). The second feature vector contains physical boundary information obtained from the named entity dictionary.

FIG. 2 is a figure illustrating an example of the generated second feature vector. In this figure, a word "Federal" in a sentence "This statement was issued by the Federal Government of the United States" is used as an example for explanation. By referring to context templates of different lengths, a variety of contexts of different length which include the word "Federal" and in which the word "Federal" is serving as the boundary can be obtained as follows.

1-gram context: "Federal",
2-gram context: "the Federal" and "Federal Government",
3-gram context: "by the Federal" and "Federal Government of",
...
6-gram context: "statement was issued by the Federal" and "Federal Government of the United States",

By separately determining whether each of the above contexts exists in the named entity dictionary obtained in advance, a code corresponding to the word in each context is generated. For example, if a context exists in the named entity dictionary, the code is 1, otherwise the code is 0. As a result, a 11-dimensional second feature vector as illustrated in Fig. 2 can be obtained.

In step 12, the first feature vector of the word is input into a multi-head attention model in a neural network model to perform training, and a semantic information feature of the word is obtained. The second feature vector of the word is input into an attention model in the neural network model to perform training, and a physical boundary feature of the word is obtained. It should be noted that the multi-head attention model is used to divide the first feature vector of the word into multiple heads, and train and merge the attention representations of the respective heads. The attention representations of the respective heads are obtained after a self-attention representation of the head and a self-attention representation of a remaining head excluding the head in question are merged.

In other words, when an attention representation of a head in question is trained, the embodiment of the present invention not only calculates a self-attention representation of the head but also calculates a self-attention representation of the remaining head excluding the head in question in the first feature vector, and merges the attention representation of the head and the attention representation of the remaining head and adopts the merged result as the attention representation of the head. Then, thereafter, the attention representations of the respective heads of the first feature vector are merged to obtain the semantic information feature of the word. The semantic information feature can be represented by a state of a hidden layer. Specifically, the method of the above merging includes vector addition and vector concatenation.

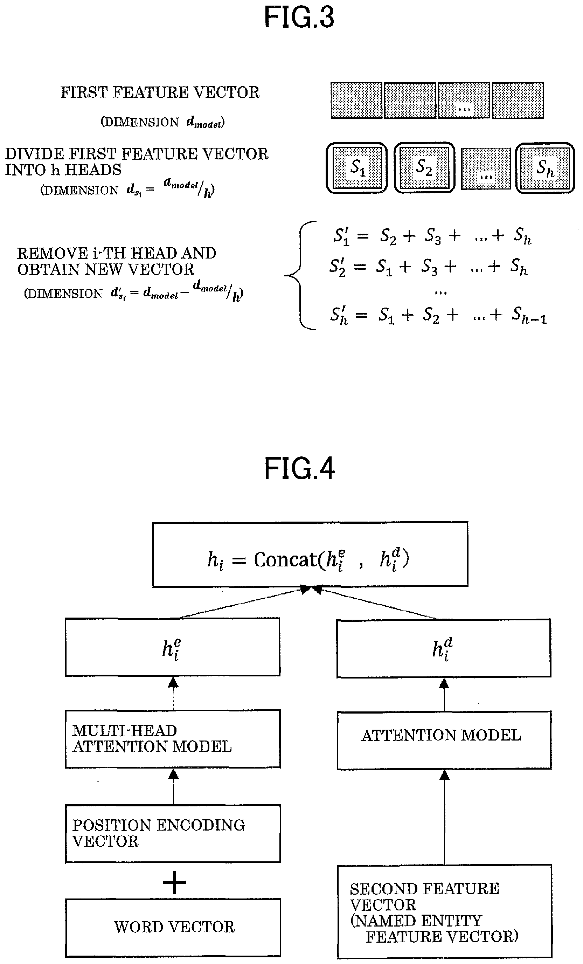

FIG. 3 is a figure illustrating an example of the multi-head attention model training. The first feature vector *Vec* having the dimension $d_{model}$ is divided into h heads. Each head is represented as $S_i$, i.e., *Vec = Concat($S_1$, $S_2$, ... , $S_h$)*. The dimension of each head is

$$d_{s_i} = \frac{d_{model}}{h}.$$

Thereafter, for each head, the head $S_i$ is removed from the first feature vector, and a remaining head $S'_i$ of a dimension

$$d'_{s_i} = d_{model} - \frac{d_{model}}{h}$$

is obtained. Each remaining head $S'_i$ is a vector obtained by merging heads excluding the head in question in the first vector feature. In other words, the remaining head is $S'_i = Concat(S_1, S_2, ... , S_{i-1}, S_{i+1}, ..., S_h)$. Self-attentions are calculated for $S_i$ and $S'_i$, and the calculation results are merged. The merged result is adopted as the attention result of the *i*-th head of the input vector. Thereafter, the attention results of the respective heads of the first feature vector are merged to be adopted as the attention representation of the current input.

In the calculation of the self-attention, three vectors are generated based on the input vector (for example, the first feature vector) of the encoder. The three vectors include a query vector Q, a key vector K, and a value vector V, which represent a query and a key-value pair. Q, K, V are usually generated by multiplying the input vector by weight matrices of different dimensions. The weight of the attention is calculated in a manner similar to the query and the key, and thereafter, the value is weighted based on the weight of the attention to derive the attention. The calculation expression of the attention is *Attention(Q, K, V)* = $softmax(\frac{QK^T}{\sqrt{d_k}})V,$ in which $d_k$ denotes the dimension of Q and K.

Since the details of the calculation of the attention are explained in conventional techniques, the calculation of the attention is not explained in detail in this specification.

According to the above processing on the multi-head, the embodiment of the present invention concatenates, for each head, the internal feature (a self-attention representation of the head) and the context feature (self-attention representation of the remaining head), and adopts it as a new representation of each head. The new representation of the word can be represented more accurately, which improves the accuracy of the named entity recognition.

Also, in step 12, the second feature vector of the word is input into the attention model in the neural network model to perform training, and a physical boundary feature of the word is obtained. The physical boundary feature can be represented by a state of a hidden layer. Here, since the length of the second feature vector is usually relatively short, the attention model can be directly used for training.

In step 13, the semantic information feature and the physical boundary feature of the word are merged to obtain the output feature of the word, and the named entity is extracted on the basis of the output feature of each word in the training sentence.

Here, the state of the hidden layer of the semantic information feature and the state of the hidden layer of the physical boundary feature are merged (more specifically, by the vector concatenation or the vector addition) to obtain the state of a hidden layer of the word and adopt it as the output feature of the word. FIG. 4 illustrates an example of the above training process, and the word vector and the position encoding vector of the word are added, and thereafter, the added vector is input into the multi-head model to train the multi-head model, and an output result $h_i^e$ is obtained. The second feature vector is input into the attention model to perform training, and an output result $h_i^d$ is obtained. $h_i^e$ $h^e_i$ and $h_i^d$ $h^d_i$ are concatenated, and the result obtained by the concatenating $h_i^e$ $h^e_i$ and $h_i^d$ $h^d_i$ is represented as the ultimate state of the hidden layer for the *i*-th word in the training sentence. Therefore, a hidden layer state sequence representation that is output as a result of inputting the training sentence into the model, i.e., a sequence ($h_0$, $h_1$, ... / $h_n$) constituted by the states of the hidden layer for the respective words in the training sentence, can be obtained.

Thereafter, with a segmented sequence of the training sentence being generated based on the states of the hidden layer for the respective words in the training sentence, the segmented sequence is input to the output layer (softmax layer) of the neural network model, and with the training of the neural network model, based on the maximum likelihood estimation, a result with the maximum conditional probability that is output by the softmax layer is obtained and adopted as the named entity, to which the segmented sequence of the training sentence belongs, with the probability of the named entity.

For example, for the training sentence $x = (x_1, x_2, ..., x_n)$ having the prediction labeling sequence $y = (y_1, y_2, ..., y_n)$ a prediction fraction can be defined by an expression $s(x, y) = \sum_{i=1}^{n} P_{i,y_i}$. In the expression, $P_{i,yi}$ denotes a scoring value for classifying $x_i$ into the $y_i$-th label. $P_i$ can be defined by an expression $P_i = W_s h_i + b_s$. In the expression, $h_i = Concat(h_i^e, h_i^d)$, and $W_s$ and $b_s$ are trainable parameters of the model.

The probability that the training sentence $x$ is labeled as the sequence $y$ can be calculated as

$$P(y|x) = \frac{e^{s(x, y)}}{\sum_{\tilde{y}} Y_x^{e^{s(x, \tilde{y})}}}$$

$Y_x$ denotes a possible labeling sequence $\tilde{y}$ of the training sentence $x$. Here, the calculation may be performed based on the maximum likelihood estimation to maximize the likelihood logarithm $log(p(\tilde{y}|x))$ of the labeling sequence $\tilde{y}$. Thereafter, by finding the maximum conditional probability in the labeling sequence $y$, the sequence is labeled.

$$y^* = \underset{\tilde{y} \epsilon Y_x}{argmax}\, s(x, \tilde{y})$$

According to the above steps, in the multi-head attention training, the embodiment of the present invention concatenates the internal feature of the head unit and the context feature of the head unit in the word vector, and adopts the concatenated features as a representation of the head unit. Accordingly, the feature information of the word can be better represented, and by sufficiently making use of the context information of the word during the named entity recognition, the embodiment of the present invention can improve the accuracy of the named entity recognition.

After the above step 13, the embodiment of the present invention can also use the neural network model, which has been obtained through the training, for a specific named entity recognition task. For example, the named entities in a processing target sentence can be extracted and labeled. When the generated neural network model is trained, the embodiment of the present invention introduces context information of the word vector, and therefore, the neural network model, which has been obtained through the training, produces a relatively accurate result of the named entity recognition, and can improve the accuracy of the named entity recognition.

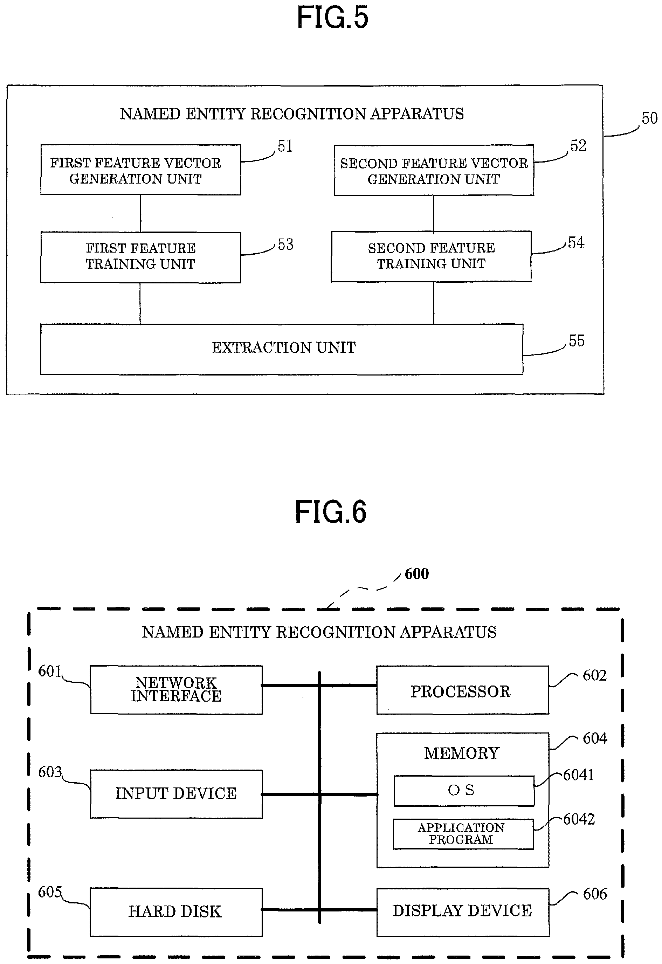

According to the named entity recognition method explained above, the embodiment of the present invention also provides an apparatus for carrying out the named entity recognition method explained above. FIG. 5 illustrates a named entity recognition apparatus 50 according to the embodiment of the present invention. The named entity recognition apparatus 50 can be used for various named entity recognition scenarios, and the accuracy of the named entity recognition can be improved. As illustrated in FIG. 5, the named entity recognition apparatus 50 includes:

a first feature vector generation unit 51 configured to obtain and merge a position encoding vector and a word vector of a word in a training sentence to obtain a first feature vector of the word;

a second feature vector generation unit 52 configured to generate a second feature vector of the word, on the basis of whether a context including the word exists in a named entity dictionary configured in advance;

a first feature training unit 53 configured to input the first feature vector of the word into a multi-head attention model in a neural network model to perform training and obtain a semantic information feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged;

a second feature training unit 54 configured to input the second feature vector of the word into an attention model in the neural network model to perform training and obtain a physical boundary feature of the word; and

an extraction unit 55 configured to merge the semantic information feature and the physical boundary feature of the word to obtain an output feature of the word, and extract a named entity on the basis of the output feature of the word in the training sentence.

Also, according to an embodiment of the present invention, the first feature vector generation unit 51 may be configured to generate an even number bit element of the position encoding vector, on the basis of a first expression $sin\,(pos/10000^{2i/d_{model}})$, and generate an odd number bit element of the position encoding vector, on the basis of a second expression $cos\,(pos/10000^{2i/d_{model}})$ (in the expression, $pos$ denotes a position of the word in the training sentence, i denotes a dimension corresponding to the even number bit element or the odd number bit element, and $d_{model}$ denotes a dimension of the word vector).

In a selective manner, the word vector of the word may be obtained through training according to a method of at least one of word embedding (word2vec), a convolutional neural network (CNN), a recurrent neural network (RNN), bidirectional encoder representation from transformers (BERT), or random initialization.

Also, according to an embodiment of the present invention, the second feature vector generation unit 52 may obtain one-hot encodings of the word, on the basis of whether contexts of predetermined lengths in the training sentence exist in the named entity dictionary. It should be noted that the named entity dictionary may include a plurality of reference named entities, the contexts includes the word, and the word serves as a boundary. Also, the one-hot encodings of the word in the contexts with different lengths may be obtained and concatenated to obtain the second feature vector of the word.

Also, according to an embodiment of the present invention, the extraction unit 55 may merge a state of a hidden layer of the semantic information feature and a state of a hidden layer of the physical boundary feature to obtain a state of a hidden layer of the word.

Also, according to an embodiment of the present invention, the extraction unit 55 may generate a segmented sequence of the training sentence on the basis of the state of the hidden layer of the word in the training sentence, and input the segmented sequence into the output layer (softmax layer) of the neural network model, to train the neural network model, and obtain, on the basis of a maximum likelihood estimation, a result with a maximum conditional probability that is output by the softmax layer and adopt the result as a named entity, to which the segmented sequence of the training sentence belongs, and a probability of the named entity.

Also, according to an embodiment of the present invention, the named entity recognition apparatus 50 may include:

a labeling unit (not illustrated) configured to extract and label a named entity from an extraction target sentence by using the neural network obtained through the training.

According to the above units, the named entity recognition apparatus according to the embodiment of the present invention introduces the context feature of the word vector, and therefore, the accuracy of the named entity recognition can be improved.

FIG. 6 is a hardware structural diagram illustrating a named entity recognition apparatus according to the embodiment of the present invention. As illustrated in FIG. 6, a named entity recognition apparatus 600 includes:

a processor 602; and
a memory 604 storing a command of a computer program,

wherein when the computer program command is executed by the processor, the processor 602 executes:

obtaining and merging a position encoding vector and a word vector of a word in a training sentence to obtain a first feature vector of the word;
generating a second feature vector of the word, on the basis of whether a context including the word exists in a named entity dictionary configured in advance;
inputting the first feature vector of the word into a multi-head attention model in a neural network model to perform training and obtain a semantic information feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged; and
merging the semantic information feature and the physical boundary feature of the word to obtain an output feature of the word, and extracting a named entity on the basis of the output feature of the word in the training sentence.

Further, as illustrated in FIG. 6, the named entity recognition apparatus 600 may further include a network interface 601, an input device 603, a hard disk 605, and a display device 606.

The interface and the devices are interconnected by a bus architecture. The bus architecture may include any number of interconnected buses and bridges. Specifically, the interface and the devices are connected as one by various circuits implemented by one or a plurality of central processors (CPU), which are represented by the processor 602, and one or a plurality of memories, which are represented by the memory 604. It can be understood that the bus architecture is to implement connection communication between these components. The bus architecture may include a power bus, a control bus, a state signal bus, and the like, in addition to the data bus, but these are all well-known in the art and therefore not described here in detail.

The network interface 601 is configured to be connected to a network (for example, the Internet, LAN, and the like), and is configured to receive data (for example, a training sentence) from the network and save the received data in the hard disk 605.

The input device 603 is configured to receive various commands that are input by the operator and send them for execution by the processor 602. The input device 603 may include a keyboard and a pointing device (for example, a mouse, a trackball, a touch panel, a touch screen, and the like).

The display device 606 is configured to display results obtained by the processor 602 executing the command. For example, the display device 606 is configured to display a result of named entity recognition and the like.

The memory 604 is configured to store a program and data used for system operation, and data such as an intermediate result in the calculation process of the processor 602.

It can be understood that the memory 604 of the embodiment of the present invention may be a volatile memory or a non-volatile memory, or may include both of a volatile memory and a non-volatile memory. Examples of non-volatile memory include read-only memory (ROM), programmable read-only memory (PROM), erasable programmable read-only memory (EPROM), and electrically erasable programmable read-only memory (EEPROM) that can be written and erased by normal voltage application, and flash memory. An example of volatile memory includes random access memory (RAM), which is used as an external cache. The memory 604 in the apparatus and method described in this specification is not limited thereto, and may be any other suitable type of memory.

In this embodiment, the memory 604 is configured to store, for example, elements of modules or data structures, a subset thereof, an extended set thereof, an OS 6041, and an application program 6042.

Among them, the operating system 6041 includes various system programs, such as a framework layer, a core library layer, a driver layer, and the like, and is to implement various basic services and processing hardware-based tasks. The application program 6042 includes various application programs, such as a browser, and the like, to implement various application services. The program for implementing the named entity recognition method according to the embodiment of the present invention may be included in the application program 6042.

The named entity recognition method disclosed in the above embodiment of the present invention may be applied by the processor 602, or may be implemented by the processor 602. The processor 602 may be an integrated circuit chip with signal processing capabilities. In an implementation, the steps of the named entity recognition method explained above can be implemented by a hardware logic circuit in the processor 602 or commands in the form of software. The above processor 602 may be a general-purpose processor, a digital signal processor (DSP), an application specific integrated circuit (ASIC), a field programmable gate array (FPGA), other programmable logic devices, discrete gate or transistor logic circuits, discrete hardware components, and is configured to execute or be able to execute the method, the steps, and logical block diagrams disclosed in the embodiment of the present invention. The general-purpose processor may be a microprocessor or the processor may be any conventional processor or the like. The steps in the method disclosed in conjunction with the embodiment of the present invention may be directly implemented and executed by a hardware decoding processor, or may be implemented and executed by a combination of hardware and software modules in the decoding processor. The software module may be located in a storage medium known in the art, such as random access memory, flash memory, read-only memory, programmable read-only memory, or electrically erasable programmable memory, and registers. The storage medium is located in the memory 604, and the processor 602 reads the information from the memory 604, and executes the steps of the named entity recognition method explained above in combination with its hardware.

It can be understood that the embodiment described herein may be implemented in hardware, software, firmware, middleware, microcode, or a combination thereof. For hardware implementation, the processor can be implemented in one or more application specific integrated circuits (ASICs), digital signal processors (DSPs), digital signal processing devices (DSPDs), programmable logic devices (PLDs), field programmable gate arrays (FPGAs), general-purpose processors, controllers, microcontrollers, microprocessors, other electronic units for performing the functions described in this application, or a combination thereof.

For software implementation, the techniques described herein can be implemented by modules (for example, procedures, functions, and the like) that perform the functions described herein. The software codes can be stored in the memory and executed by the processor. The memory may be implemented in the processor or outside of the processor.

Specifically, when the computer program is executed by the processor 602, the processor 602 is configured to execute:

generating an even number bit element of the position encoding vector, on the basis of a first expression $sin\ (pos/10000^{2i/d_{model}})$, and generating an odd number bit element of the position encoding vector, on the basis of a second expression $cos\ (pos/\ 10000^{2i/d_{model}})$ (in the expression, $pos$ denotes a position of the word in the training sentence, $i$ denotes a dimension corresponding to the even number bit element or the odd number bit element, and $d_{model}$ denotes a dimension of the word vector).

In a selective manner, the word vector of the word may be obtained through training according to a method of at least one of word embedding (word2vec), a convolutional neural network (CNN), a recurrent neural network (RNN), bidirectional encoder representation from transformers (BERT), or random initialization.

Specifically, when the computer program is executed by the processor 602, the processor 602 is configured to execute:

obtaining one-hot encodings of the word, on the basis of whether contexts of predetermined lengths in the training sentence exist in the named entity dictionary, the named entity dictionary including a plurality of reference named entities, the context including the word, and the word serving as a boundary, and the processor 602 further implementing obtaining and concatenating the one-hot encodings of the word in the contexts with different lengths to obtain the second feature vector of the word.

Specifically, when the computer program is executed by the processor 602, the processor 602 is configured to execute:

merging a state of a hidden layer of the semantic information feature and a state of a hidden layer of the physical boundary feature to obtain a state of a hidden layer of the word.

Specifically, when the computer program is executed by the processor 602, the processor 602 is configured to execute:

generating a segmented sequence of the training sentence on the basis of the state of the hidden layer of the word in the training sentence, and inputting the segmented sequence into an output layer, which is a softmax layer, of the neural network model, to train the neural network model, and obtaining, on the basis of a maximum likelihood estimation, a result with a maximum conditional probability that is output by the softmax layer and adopting the result as a named entity, to which the segmented sequence of the training sentence belongs, and a probability of the named entity.

Specifically, when the computer program is executed by the processor 602, the processor 602 is configured to execute:

extracting and labeling a named entity from an extraction target sentence by using the neural network obtained through the training.

A person skilled in the art would understand that the units and the steps of algorithms in various examples described according to the embodiment disclosed herein can be implemented by electronic hardware, or a combination of computer software and electronic hardware. Whether these functions are executed with hardware or software depends on the specific application of the technical solution and design constraints. A person skilled in the art would be able to use different methods to implement the described functions for particular applications, but such implementation should not be considered to be beyond the scope of the present invention.

A person skilled in the art would clearly understand that for the convenience and conciseness of the description, the person skilled in the art would be able to find the specifics of the named entity recognition apparatus, the units thereof, and the work process thereof described above by referring to the corresponding explanation about the embodiment of the named entity recognition method. Therefore, the specifics of the named entity recognition apparatus, the units thereof, and the work process thereof will not be explained here.

In the embodiment provided in this application, it should be understood that the disclosed apparatus and method may be implemented in other ways. For example, the apparatus described above is merely an example. For example, in the embodiment, the units are divided in terms of functionality, but in actual implementation, the units may be divided in other ways, for example, multiple units or components may be combined or integrated into another system, or some of the functions may be omitted or not implemented. In addition, mutual connection, direct connection, or communication connection illustrated or disclosed above may be indirect connection or communication connection through an interface, a device, or a unit, and may be in electrical, mechanical, or other forms.

The units described as separate components may or may not be physically separated, and the components described as units may or may not be physical units, that is, they may be located in one place, or may be provided in a distributed manner on multiple network units. Some or all of the units may be selected according to actual needs for implementing the objectives of the solutions of the embodiment of the present invention.

In addition, the functional units in the embodiment of the present invention may be integrated into one processing unit, or the functional units may be physically separated, or two or more functional units may be integrated into a single unit.

In a case where the functions are implemented in the form of software functional units and sold or used as independent products, these functions can be stored in a computer-readable storage medium. Based on this understanding, an essential part of the technical solution of the present invention, a part that contributes to the conventional technique, or a part of the technical solution can be embodied in the form of a software product. The computer software product is stored in a storage medium, and includes several instructions to enable a computer device (which may be a personal computer, a server, a network device, or the like) to perform all or some of the steps of the named entity recognition method described in the embodiment of the present invention. The above storage media include various kinds of media that can store program codes, such as USB memory, a mobile hard disk, ROM, RAM, a magnetic disk, or an optical disk.

The above description is merely a concrete embodiment of the present invention, and the scope of protection to be provided for the present invention is not limited thereto. Changes or replacements which a person skilled in the art would easily conceive of within the technical scope disclosed by the application of the present invention should be covered by the scope of protection to be provided for the present invention. Therefore, the scope of protection to be provided for the present invention shall be based on the scope of the claims.

The present application is based on and claims the benefits of the priority of Chinese Priority Application No. 201910650142.5 filed on July 18, 2019. The entire content of the foregoing application is incorporated herein by reference.

# Claims

1. A named entity recognition method comprising:

   obtaining and merging a position encoding vector and a word vector of a word in a training sentence to obtain a first feature vector of the word; generating a second feature vector of the word, on the basis of whether a context including the word exists in a named entity dictionary configured in advance; inputting the first feature vector of the word into a multi-head attention model in a neural network model to perform training and obtaining a semantic information feature of the word, inputting the second feature vector of the word into an attention model in the neural network model to perform training and obtaining a physical boundary feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged; and merging the semantic information feature and the physical boundary feature of the word to obtain an output feature of the word, and extracting a named entity on the basis of the output feature of the word in the training sentence.

2. The named entity recognition method according to claim 1, wherein the obtaining and merging the position encoding vector further comprises generating an even number bit element of the position encoding vector, on the basis of a first expression $sin\ (pos/10000^{2i/d_{model}})$, and generating an odd number bit element of the position encoding vector, on the basis of a second expression $cos\ (pos/10000^{2i/d_{model}})$, where $pos$ denotes a position of the word in the training sentence, $i$ denotes a dimension corresponding to the even number bit element or the odd number bit element, and $d_{model}$ denotes a dimension of the word vector.

3. The named entity recognition method according to claim 1, wherein the word vector of the word is obtained through training according to a method of at least one of word embedding (word2vec), a convolutional neural network (CNN), a recurrent neural network (RNN), bidirectional encoder representation from transformers (BERT), and random initialization.

4. The named entity recognition method according to claim 1, wherein the generating the second feature vector of the word further comprises:

   obtaining one-hot encodings of the word, on the basis of whether contexts of predetermined lengths in the training sentence exist in the named entity dictionary, the named entity dictionary including a plurality of reference named entities, the context including the word, and the word serving as a boundary; and obtaining and concatenating the one-hot encodings of the word in contexts with different lengths to obtain the second feature vector of the word.

5. The named entity recognition method according to claim 1, wherein the merging the semantic information feature and the physical boundary feature of the word to obtain the output feature of the word further comprises merging a state of a hidden layer of the semantic information feature and a state of a hidden layer of the physical boundary feature to obtain a state of a hidden layer of the word.

6. The named entity recognition method according to claim 5, wherein the extracting the named entity on the basis of the output feature of the word in the training sentence comprises generating a segmented sequence of the training sentence on the basis of the state of the hidden layer of the word in the training sentence, and inputting the segmented sequence into an output layer, which is a softmax layer, of the neural network model, to train the neural network model, and obtaining, on the basis of a maximum likelihood estimation, a result with a maximum conditional probability that is output by the softmax layer and adopting the result as a named entity, to which the segmented sequence of the training sentence belongs, and a probability of the named entity.

7. The named entity recognition method according to claim 6, wherein after the neural network model is trained, the named entity recognition method further comprises extracting and labeling a named entity from an extraction target sentence by using the neural network obtained through the training.

8. A named entity recognition apparatus comprising:

   a first feature vector generation unit configured to obtain and merge a position encoding vector and a word vector of a word in a training sentence to obtain a first feature vector of the word; a second feature vector generation unit configured to generate a second feature vector of the word, on the basis of whether a context including the word exists in a named entity dictionary configured in advance; a first feature training unit configured to input the first feature vector of the word into a multi-head attention model in a neural network model to perform training and obtain a semantic information feature of the word, the multi-head attention model being configured to divide the first feature vector into a plurality of heads and train and merge attention representations of the plurality of heads, the attention representations of the plurality of heads being obtained after a self-attention representation of one of the heads and a self-attention representation of a remaining head excluding the one of the heads are merged;

a second feature training unit configured to input the second feature vector of the word into an attention model in the neural network model to perform training and obtain a physical boundary feature of the word; and

an extraction unit configured to merge the semantic information feature and the physical boundary feature of the word to obtain an output feature of the word, and extract a named entity on the basis of the output feature of the word in the training sentence.

9. The named entity recognition apparatus according to claim 8, wherein the first feature vector generation unit generates an even number bit element of the position encoding vector, on the basis of a first expression $sin\ (pos/10000^{2i/d_{model}})$, and generates an odd number bit element of the position encoding vector, on the basis of a second expression $cos\ (pos/10000^{2i/d_{model}})$, where $pos$ denotes a position of the word in the training sentence, i denotes a dimension corresponding to the even number bit element or the odd number bit element, and $d_{model}$ denotes a dimension of the word vector.

10. The named entity recognition apparatus according to claim 8, wherein the word vector of the word is obtained through training according to a method of at least one of word embedding (word2vec), a convolutional neural network (CNN), a recurrent neural network (RNN), bidirectional encoder representation from transformers (BERT), and random initialization.

11. The named entity recognition apparatus according to claim 8, wherein the second feature vector generation unit obtains one-hot encodings of the word, on the basis of whether contexts of predetermined lengths in the training sentence exist in the named entity dictionary,

the named entity dictionary includes a plurality of reference named entities, the contexts includes the word, and the word serves as a boundary, and
the one-hot encodings of the word in the contexts with different lengths are obtained and concatenated to obtain the second feature vector of the word.

12. The named entity recognition apparatus according to claim 8, wherein the extraction unit merges a state of a hidden layer of the semantic information feature and a state of a hidden layer of the physical boundary feature to obtain a state of a hidden layer of the word.

13. The named entity recognition apparatus according to claim 12, wherein the extraction unit generates a segmented sequence of the training sentence on the basis of the state of the hidden layer of the word in the training sentence, and inputs the segmented sequence into an output layer, which is a softmax layer, of the neural network model, to train the neural network model, and obtains, on the basis of a maximum likelihood estimation, a result with a maximum conditional probability that is output by the softmax layer and adopts the result as a named entity, to which the segmented sequence of the training sentence belongs, and a probability of the named entity.

14. The named entity recognition apparatus according to claim 13, further comprising a labeling unit configured to extract and label a named entity from an extraction target sentence by using the neural network obtained through the training.

15. A computer-readable recording medium recorded with a computer program for, when executed by a processor, implementing the named entity recognition method as recited in any one of claims 1 to 7.

# FIG.1

MERGE AND OBTAIN POSITION ENCODING VECTOR AND WORD VECTOR OF WORD TO OBTAIN FIRST FEATURE VECTOR OF WORD, AND GENERATE SECOND FEATURE VECTOR OF WORD BASED ON WHETHER CONTEXT CONTAINING WORD EXISTS IN NAMED ENTITY DICTIONARY. `11`

INPUT FIRST FEATURE VECTOR INTO MULTI-HEAD ATTENTION MODEL TO PERFORM TRAINING, AND OBTAIN SEMANTIC INFORMATION FEATURES OF WORD. INPUT SECOND FEATURE VECTOR OF WORD INTO ATTENTION MODEL IN NEURAL NETWORK MODEL TO PERFORM TRAINING, AND OBTAIN PHYSICAL BOUNDARY FEATURE OF WORD. `12`

MERGE SEMANTIC INFORMATION FEATURE AND PHYSICAL BOUNDARY FEATURE TO OBTAIN OUTPUT FEATURE OF WORD, AND EXTRACT NAMED ENTITY ON THE BASIS OF OUTPUT FEATURE OF WORD IN TRAINING SENTENCE `13`

# FIG.2

This statement was issued by the Federal Government of the United States.

⇩

| | |
|---|---|
| 1-GRAM CONTEXT | Federal |
| 2-GRAM CONTEXT | the Federal | Federal Government |
| 3-GRAM CONTEXT | by the Federal | Federal Government of |
| ... | | |
| 6-GRAM CONTEXT | was issued by the Federal Government | Federal Government of the United States |

SECOND FEATURE VECTOR  0  0  1  0  0  0  0  0  0  0  1

# FIG.3

FIRST FEATURE VECTOR

(DIMENSION $d_{model}$)

DIVIDE FIRST FEATURE VECTOR
INTO h HEADS

(DIMENSION $d_{s_i} = {}^{d_{model}}/_h$)

REMOVE i-TH HEAD AND
OBTAIN NEW VECTOR

(DIMENSION $d'_{s_i} = d_{model} - {}^{d_{model}}/_h$)

$$\begin{cases} S'_1 = S_2 + S_3 + \ldots + S_h \\ S'_2 = S_1 + S_3 + \ldots + S_h \\ \ldots \\ S'_h = S_1 + S_2 + \ldots + S_{h-1} \end{cases}$$

# FIG.4

$$h_i = \text{Concat}(h_i^e \ , \ h_i^d)$$

$h_i^e$

$h_i^d$

| MULTI-HEAD ATTENTION MODEL |
| --- |

| ATTENTION MODEL |
| --- |

| POSITION ENCODING VECTOR |
| --- |

$+$

| WORD VECTOR |
| --- |

| SECOND FEATURE VECTOR (NAMED ENTITY FEATURE VECTOR) |
| --- |

14

# FIG.5

NAMED ENTITY RECOGNITION APPARATUS 50

| FIRST FEATURE VECTOR GENERATION UNIT 51 | SECOND FEATURE VECTOR GENERATION UNIT 52 |
|---|---|
| FIRST FEATURE TRAINING UNIT 53 | SECOND FEATURE TRAINING UNIT 54 |

EXTRACTION UNIT 55

# FIG.6

600

NAMED ENTITY RECOGNITION APPARATUS

601 NETWORK INTERFACE

602 PROCESSOR

603 INPUT DEVICE

604 MEMORY

6041 O S

6042 APPLICATION PROGRAM

605 HARD DISK

606 DISPLAY DEVICE

Europäisches
Patentamt

European
Patent Office

Office européen
des brevets

## EUROPEAN SEARCH REPORT

Application Number

EP 20 18 5774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JING LI ET AL: "A Survey on Deep Learning for Named Entity Recognition", IEEE TRANSACTIONS ON KNOWLEDGE AND DATA ENGINEERING., 22 December 2018 (2018-12-22), pages 1-1, XP055749798, US ISSN: 1041-4347, DOI: 10.1109/TKDE.2020.2981314 * sections 1,3-5 * | 1-15 | INV. G06F40/295 G06F40/284 G06F40/30 G06N20/00 |
| T | ASHISH VASWANI ET AL: "Attention Is All You Need", ARXIV.ORG, CORNELL UNIVERSITY LIBRARY, 201 OLIN LIBRARY CORNELL UNIVERSITY ITHACA, NY 14853 , 12 June 2017 (2017-06-12), pages 1-15, XP081404664, Retrieved from the Internet: URL:https://arxiv.org/abs/1706.03762v5 [retrieved on 2020-11-10] * section 3 * | 1-15 | |
| X | CN 109 388 807 A (UNIV SUN YAT SEN) 26 February 2019 (2019-02-26) * Claims 1-8, passages related to Fig. 4 and 6; figures 4,6 * | 1-15 | TECHNICAL FIELDS SEARCHED (IPC) G06F G06N |
| X | CONGYING XIA ET AL: "Multi-Grained Named Entity Recognition", ARXIV.ORG, CORNELL UNIVERSITY LIBRARY, 201 OLIN LIBRARY CORNELL UNIVERSITY ITHACA, NY 14853, 20 June 2019 (2019-06-20), XP081378301, * the whole document * | 1-15 | |

-/--

The present search report has been drawn up for all claims

| Place of search | Date of completion of the search | Examiner |
|---|---|---|
| Berlin | 12 November 2020 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches Patentamt

European Patent Office

Office européen des brevets

**EUROPEAN SEARCH REPORT**

Application Number

EP 20 18 5774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUYING ZHU ET AL: "CAN-NER: Convolutional Attention Network forChinese Named Entity Recognition", ARXIV.ORG, CORNELL UNIVERSITY LIBRARY, 201 OLIN LIBRARY CORNELL UNIVERSITY ITHACA, NY 14853, 3 April 2019 (2019-04-03), XP081164580, * the whole document * | 1-15 | |
| X | ZUKOV-GREGORIC ANDREJ ET AL: "Neural Named Entity Recognition Using a Self-Attention Mechanism", 2017 IEEE 29TH INTERNATIONAL CONFERENCE ON TOOLS WITH ARTIFICIAL INTELLIGENCE (ICTAI), IEEE, 6 November 2017 (2017-11-06), pages 652-656, XP033353326, DOI: 10.1109/ICTAI.2017.00104 [retrieved on 2018-06-04] * the whole document * | 1-15 | |
| X,P | CHENG GONG ET AL: "An End-to-End Named Entity Recognition Model for Chinese", IOP CONFERENCE SERIES: MATERIALS SCIENCE AND ENGINEERING, vol. 692, 27 November 2019 (2019-11-27), page 012050, XP055749856, DOI: 10.1088/1757-899X/692/1/012050 * the whole document * | 1-15 | TECHNICAL FIELDS SEARCHED (IPC) |

-/--

The present search report has been drawn up for all claims

| Place of search | Date of completion of the search | Examiner |
|---|---|---|
| Berlin | 12 November 2020 | Alt, Susanne |

Europäisches
Patentamt

European
Patent Office

Office européen
des brevets

**EUROPEAN SEARCH REPORT**

Application Number

EP 20 18 5774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | QIAN WAN ET AL: "A self-attention based neural architecture for Chinese medical named entity recognition", MATHEMATICAL BIOSCIENCES AND ENGINEERING : MBE OCT 2010, vol. 17, no. 4, 9 May 2020 (2020-05-09), pages 3498-3511, XP055749834, ISSN: 1551-0018, DOI: 10.3934/mbe.2020197 * the whole document * | 1-15 | |
| A | CN 108 829 678 A (GUANGDONG UNIV OF FOREIGN STUDIES) 16 November 2018 (2018-11-16) * the whole document * | 1-15 | |

TECHNICAL FIELDS
SEARCHED        (IPC)

The present search report has been drawn up for all claims

| Place of search | Date of completion of the search | Examiner |
|---|---|---|
| Berlin | 12 November 2020 | Alt, Susanne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 18 5774

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2020

| Patent document cited in search report | | Publication date | Patent family member(s) | Publication date |
|---|---|---|---|---|
| CN 109388807 | A | 26-02-2019 | NONE | |
| CN 108829678 | A | 16-11-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910650142

**Non-patent literature cited in the description**

- **JONAS GEHRING.** *Convolutional Sequence to Sequence Learning,* 2017